# EUROPEAN PATENT APPLICATION

(11) **EP 4 715 944 A1**
(43) Date of publication of application: **25.03.2026**
(21) Application number: 24908014.4
(22) Date of filing: 17.12.2024
(51) Int. Cl.: H01M 10/0583, H01M 10/04, H01M 10/052, H01M 50/186, H01M 50/193, H01M 4/134, H01M 50/531

(54) **ELECTRODE ASSEMBLY**

(30) Priority: 21.12.2023 KR 20230188156
(71) Applicant: LG Energy Solution, Ltd., Seoul 07335 (KR)
(72) Inventor: LEE, Jaehyun, Daejeon 34122 (KR); LEE, Jong Yoon, Daejeon 34122 (KR)
(74) Representative: Goddar, Heinz J.
(86) International application number: PCT/KR2024/020499
(87) International publication number: WO 2025/135731

(57) **Abstract**

An electrode assembly is provided. An electrode assembly, according to one aspect of the present specification, comprises: an electrode-separator assembly including two layers of separators, each having a rectangular shape, and a first electrode disposed between the two layers of separators in a rectangular shape extending in a direction corresponding to the two layers of separators; and a second electrode separated from the first electrode by means of the separators, wherein at least a portion of the edge region of the two layers of separators is thermally fused in a state in which the first electrode is disposed between the two layers of separators, the electrode-separator assembly in the thermally fused state is folded in a zigzag pattern along the longitudinal direction, and the second electrode is disposed between layers of the folded and stacked electrode-separator assembly.

## Description

### Technical Field

The present disclosure relates to an electrode assembly. More specifically, the present disclosure relates to an electrode assembly for preventing battery ignition and battery overload and for which efficient manufacturing is allowed.

### Background Art

Recently, a secondary battery is greatly researched and developed because of being rechargeable unlike a primary battery and for a possibility of miniaturization and large capacity. As development of a technology and a demand for a mobile device are increasing, a demand for the secondary battery as an energy source is rapidly increasing.

The secondary battery may be classified as a coin-type battery, a cylindrical battery, a rectangular battery, or a pouch-type battery depending on a shape of a battery case. An electrode assembly mounted in the battery case of the secondary battery may be a chargeable and dischargeable power generation element formed in a stack structure of an electrode and a separator.

The secondary battery may be classified according to what structure an electrode having a positive electrode/separator/negative electrode structure is formed in. Typically, an example of a structure of the electrode assembly may include a jelly-roll type that is a structure in which long sheet-shaped positive electrodes and negative electrodes are wound in a state in which a separator is interposed in between and a stack type in which multiple positive electrodes and negative electrodes cut in a predetermined size are sequentially stacked in a state in which a separator is interposed in between.

However, with respect to a jelly roll-type electrode assembly, battery performance has been rapidly decreased because inter-electrode intervals have been non-uniform due to easy deformation of the electrode assembly, stability of the battery has been decreased due to occurrence of an inter-electrode electrical short circuit, and since a long sheet-shaped positive electrode and negative electrode have been to be wound, quickly winding the positive electrode and the negative electrode while an interval between the positive electrode and the negative electrode is maintained has been limited. In addition, with respect to a stack-type electrode assembly, since multiple positive electrode and negative electrode units have been to be stacked, productivity has been decreased because a large amount of time and effort has been required in a process of sequentially stacking.

In order to overcome such a difficulty, a stack and folding-type electrode assembly in which the jelly-roll type and the stack type are mixed has been introduced. The stack and folding-type electrode assembly has a structure in which successive separators are folded zigzag and a positive electrode and a negative electrode in predetermined units are interposed between the folded separators.

However, in a process of manufacturing a conventional stack and folding-type electrode assembly, since the negative electrode and the positive electrode have been to be interposed one by one between the separators folded zigzag, a relatively large amount of time and effort has been required in the process of manufacturing the electrode assembly.

Also, an electrical short circuit by contact of the negative electrode and the positive electrode with each other due to thermal contraction has occurred when a separator that separates the negative electrode and the positive electrode reaches a predetermined temperature or more. Such an electrical short circuit has been a cause of battery ignition.

Moreover, when venting in a battery cell has occurred in the conventional stack and folding-type electrode assembly, battery ignition has been accelerated due to an inflow of air.

### Detailed Description of the Invention

### Technical Goals

The present disclosure is to overcome at least a portion of difficulties in the related art and to provide an electrode assembly that may be simply and efficiently manufactured.

An aspect provides an electrode assembly having increased stability by preventing battery ignition or battery overload by preventing an electrical short circuit between a negative electrode and a positive electrode due to contraction of a separator.

Another aspect provides an electrode assembly that may further suppress battery ignition by sealing a separator to block contact with outside air when venting in a battery cell occurs.

### Technical solutions

According to an aspect, there is provided an electrode assembly including an electrode-separator assembly comprising two layers of separators of which each layer is rectangular and a fist electrode disposed between the two layers of separators in a rectangular shape extended in a direction corresponding to the two layers of separators, and a second electrode separated from the first electrode by the separators, and at least a portion of an edge area of the two layers of separators is thermally fused in a state in which the first electrode is disposed between the two layers of separators, the electrode-separator assembly in a state of being thermally fused is folded in a zigzag form in a length direction, and the second electrode is disposed between layers of the electrode-separator assembly which is folded and stacked.

Through this, it is possible to simply and efficiently manufacture the electrode assembly.

In addition, it is possible to prevent battery ignition or battery overload by preventing an electrical short circuit between a negative electrode and a positive electrode due to contraction of a separator. Through this, stability of the electrode assembly may be improved.

Also, it is possible to further suppress the battery ignition by sealing the separator to block contact with outside air when venting in a battery cell occurs.

The electrode assembly may further include a tab that protrudes from the first electrode and of which a portion is exposed outward from the two layers of separators, and a sealing member provided between the two layers of separators at least at a position, at which the tab is provided in an edge area of the two layers of separators, and in an area around the position at which the tab is provided.

The first electrode may include a plurality of first electrode plates folded together and distinguished from each other as the electrode-separator assembly is folded zigzag, the tab may be provided to each of the plurality of first electrode plates and provided to be adjacent to another at two adjacent first electrode plates among the plurality of first electrode plates, and the sealing member may be provided at least to cover all the two adjacent tabs.

The sealing member may be provided to one surface and the other surface of the tab.

At least a portion of an area of the sealing member may overlap the first electrode.

The sealing member may have a polyimide material.

The two layers of separators may be formed as one separator is folded in half, and the electrode-separator assembly may be formed as a remaining edge other than a folded edge among edges of the two layers of separators is thermally fused.

A folding line formed as the one separator is folded may be formed in a direction parallel to a longitudinal direction of the two layers of separators.

Thermal fusion may be performed in an area of the two layers of separators, which does not overlap the first electrode.

The second electrode may be a negative electrode formed of lithium metal, and the first electrode may be a positive electrode.

According to another aspect, there is also provided a method of manufacturing an electrode assembly, the method including supplying a two layers of separators of which each layer is rectangular, disposing, between the two layers of separators, a first electrode having a rectangular shape extended in a direction corresponding to the two layers of separators, forming an electrode-separator assembly formed with the two layers of separators and the first electrode by thermally fusing at least a portion of an edge area of the two layers of separators, and disposing, with folding the electrode-separator assembly in a zigzag form, the second electrode between layers of the electrode-separator assembly which is folded and stacked.

The supplying of the two layers of separators may include folding one separator, and a folding line formed as the one separator is folded may be formed in a direction parallel to a longitudinal direction of the two layers of separators.

The electrode assembly may include a tab that protrudes from the first electrode and of which a portion is exposed outward from the two layers of separators, and a sealing member provided between the two layers of separators at least at a position, at which the tab is provided in an edge area of the two layers of separators, and in an area around the position at which the tab is provided, and the method further may include attaching the sealing member to at least one surface of the tab after disposing the first electrode between the two layers of separators.

The first electrode may include a plurality of first electrode plates folded together and distinguished from each other as the electrode-separator assembly is folded zigzag, and the method may further include forming, before the first electrode is disposed between the two layers of separators, a tab for each of the plurality of first electrode plates by notching an edge of one side of the first electrode which is provided in the rectangular shape.

When the two layers of separators are provided by folding one separator, the thermally fusing may be performed by covering an outer surface of one side of the two layers of separators with a release film and pressing an upper portion of the release film with a hot-press, and the at least a portion of the edge area of the two layers of separators may be edges of remaining three sides other than an edge at which the one separator is folded.

### Effects of the Invention

According to example embodiments, it is possible to simply and efficiently manufacture an electrode assembly.

According to example embodiments, it is possible to prevent battery ignition or battery overload by preventing an electrical short circuit between a negative electrode and a positive electrode due to contraction of a separator. Through this, stability of the electrode assembly may be improved.

According to example embodiments, it is possible to further suppress the battery ignition by sealing the separator to block contact with outside air when venting in a battery cell occurs.

### Brief Description of Drawings

FIGS. 1 through 4 illustrate a process of manufacturing an electrode assembly according to an example embodiment of the present disclosure.
FIG. 5 is a cross-sectional diagram illustrating an electrode assembly according to an example embodiment of the present disclosure.
FIG. 6 is a graph comparing a time point of an electrical short circuit and a time point of ignition in a battery cell including an electrode assembly according to an example embodiment of the preset disclosure and a time point of an electrical short circuit and a time point of ignition in a battery cell including an electrode assembly according to a comparative example.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

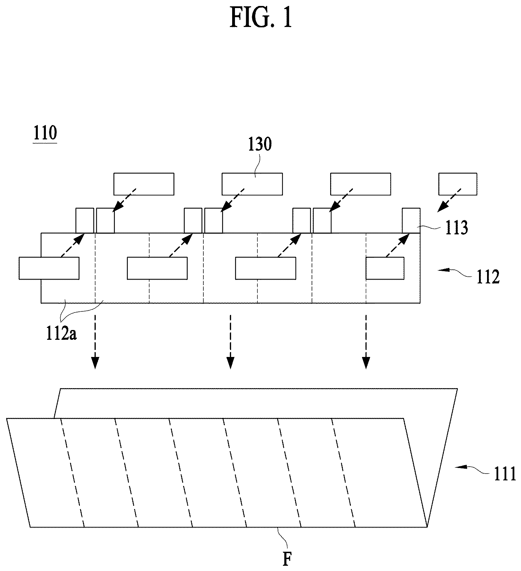

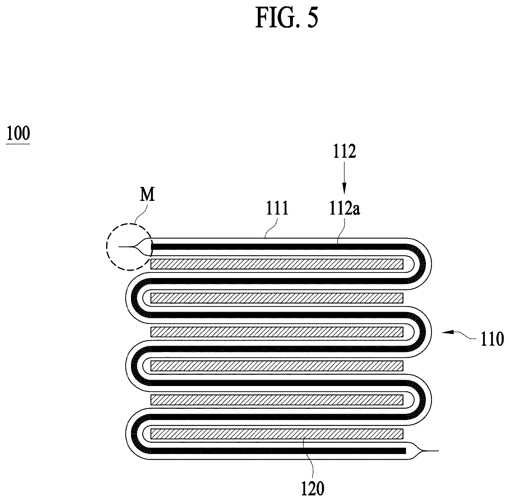

FIGS. 1 through 4 illustrate a process of manufacturing an electrode assembly according to an example embodiment of the present disclosure. FIG. 5 is a cross-sectional diagram illustrating the electrode assembly according to an example embodiment of the present disclosure.

An electrode assembly 100 according to an example embodiment of the present disclosure may include a separator 111, a first electrode 112, and a second electrode 120, but may be implemented without a portion thereof, and does not exclude an additional element.

Hereinafter, the present disclosure will be described based on a premise that the electrode assembly 100 is used in a lithium metal battery. However, the electrode assembly 100 according to an example embodiment of the present disclosure is not limited thereto and may be used in a lithium-ion battery, a lithium polymer secondary battery, a lithium-ion polymer secondary battery, or the like.

Referring to FIGS. 1 through 5, the electrode assembly 100 may include an electrode-separator assembly 110. The electrode-separator assembly 110 may have a structure in which the first electrode 112 is surrounded by the separator 111 and may be understood as having a structure in which the first 112 is isolated from outside air by the separator 111.

The electrode-separator assembly 110 may include the separator 111. The separator 111 may be provided in two layers. Each layer of two layers of separators 111 may be in a rectangular shape . For example, with FIGS. 1 through 4 as references, each layer of the two layers of separators 111 may have a shape horizontally extended.

Referring to FIG. 1, the two layers of separators 111 may be formed as one separator 111 is folded in half. For example, a folding line F formed as the one separator 111 is folded may be parallel to a longitudinal direction of the two layers of separators 111. In other words, the folding line F may form one long side among four edges of the two layers of separators 111 which are rectangular. Through this, since a portion folded to completely be sealed among the four edges of the two layers of separators 111 may be a long side, the first electrode 112 may be further effectively isolated from an outside. However, the folding line F formed as the one separator 111 is folded is not limited thereto and may form one short side among the four edges of the two layers of separators 111 according to a shape of the provided one separator 111.

The separator 111 is a physical separator having a function of physically separating the first electrode 112 and the second electrode 120. A general separator may be used without particular limitation, and particularly, a separator having low resistance to migration of an ion of an electrolyte and an excellent electrolyte impregnation capability is desired.

The separator 111 may separate or insulate the first electrode 112 and the second electrode 120 from each other, may allow transfer of an lithium ion between a positive electrode and a negative electrode, and may be formed of a porous and nonconductive or insulating material.

A porous basic material generally used in a lithium metal battery may be used as a porous basic material forming the separator 111. A single porous polymer film or a stacked porous polymer films may be also used. For example, the porous basic material may include one or more basic materials selected from a group including polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinylchloride, polyacrylonitrile, cellulose, nylon, poly-p-phenylenebenzobisoxazole, and polyarylate.

A thickness of the porous basic material is not particularly limited, but may range from 1 to 100 micrometers (µm) and desirably from 5 to 50 µm. A range of the thickness of the porous basic material is not limited to the above-described range, but a separator may be easily damaged during use of a battery because a mechanical materiality is decreased when the range is excessively thin. Also, an average diameter of an air cavity and porosity of the porous basic material are also not particularly limited, but may ranges from 0.1 to 50 µm and from 10 to 95%, respectively.

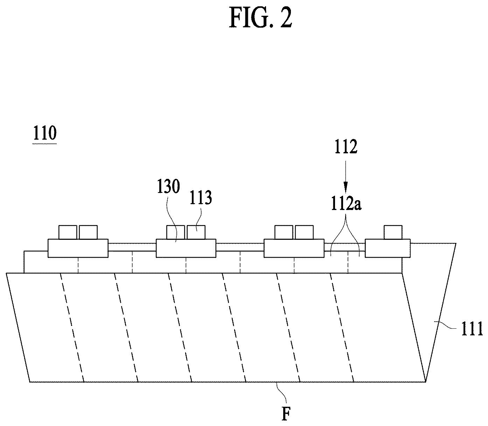

Referring to FIGS. 1 and 2, the electrode-separator assembly 110 may include the first electrode 112. The first electrode 112 may be provided in a rectangular shape extended in a direction corresponding to the two layers of separators 111. That is, with FIG. 1 as a reference, the first electrode 112 may have a rectangular shape horizontally elongated. The first electrode 112 may be disposed between the two layers of separators 111.

Referring to FIGS. 1 through 3 as references, the first electrode 112 may be provided in a size smaller than that of the two layers of separators 111. Through this, when the first electrode 112 is disposed between the two layers of separators 111, a margin area M not overlapping the first electrode 112 may be formed to the two layers of separators 111. The margin area M may be a portion at which thermal fusion is performed. Due to presence of the margin area M, the first electrode 112 may be prevented from being directly heated, and deformation of or damage to the first electrode 112 due to heat may be minimized.

Referring to FIG. 1, the first electrode 112 may include a plurality of first electrode plates 112a. As the electrode-separator assembly 110 is folded zigzag, the first electrode 112 may be folded together, so that the plurality of first electrode plates 112a may be distinguished to be formed. Referring to FIG. 1, the first electrode plates 112a may be understood as individually being portions distinguished by dotted lines in the horizontally elongated first electrode 112. The first electrode plates 112a may individually correspond to second electrodes 120 disposed with the separator 111 in between after the electrode-separator assembly 110 is folded zigzag.

It may be desired that the first electrode 112 is a positive electrode. Specifically, in a case of a lithium metal battery, a negative electrode may be formed of lithium metal. Since being vulnerable to heat, the lithium metal may be easily deformed or damaged. Thus, when the separator 111 is heated after the lithium metal negative electrode which is vulnerable to heat is disposed between the two layers of separators 111, the lithium metal negative electrode may be deformed or damaged. In contrast, when the first electrode 112 disposed between the two layers of separators 111 is the positive electrode, the above-described difficulty may be minimized.

In contrast, when heat resistance of the lithium metal forming the negative electrode in the lithium metal battery is sufficient, or in a case of a lithium-ion battery not using a metal, the first electrode 112 disposed between the two layers of separators 111 may be the negative electrode.

The first electrode 112 may include a current collector and a positive electrode active material layer applied to at least one surface of the current collector.

A positive electrode current collector supports a positive electrode active material and is not particularly limited as long as the positive electrode current collector does not cause a chemical change in a corresponding battery and has high conductivity. For example, copper, stainless steel, aluminum, nickel, titanium, palladium, sintered carbon, copper or stainless steel of which a surface is processed with carbon, nickel, silver, or the like, aluminum-cadmium alloy, or the like may be used.

The positive electrode current collector may have a minutely uneven surface to strengthen a force of being coupled to the positive electrode active material and may have various forms such as a film, a sheet, foil, a mesh, a net, a porous body, a foam, or a nonwoven fabric.

The positive electrode active material layer may include the positive electrode active material and further include a conductive material, a binder, an additive, or the like.

A lithium-containing transition metal oxide may be used as the positive electrode active material. For example, one selected from a group including LiCoO₂,LiNiO₂,LiMnO₂,LiMnO₂O₄,Li(NiₐCo_{b}Mn_{c})O₂(0<a<1,0<b<1,0<c<1,a+b+c=1 ),LiNi1-_{y}Co_{y}O₂,LiCo1-_{y}Mn_{y}O₂,LiNi₁-_{y}Mn_{y}O₂(O<1),Li(NiₐCo_{b}Mn_{c})O₄(0<a<2,0<b<2,0<c<2,a+b+c=2),LiMn₂-_{z}Ni_{z}O₄,LiMn₂-_{z}Co_{z}O₄(0<z<2),LiCoPO₄, and LiFePO₄ or a compound including two thereof may be used. In addition, a sulfide, a selenide, a halide, or the like other than such an oxide may be used.

The positive electrode active material may include a sulfur compound, and the sulfur compound may be one or more selected from a group including elemental sulfur S₈, an organic sulfur compound (Li2Sₙ(n≥1)), and a carbon-sulfur polymer ((C₂Sₓ)ₙ:x=2.5~50,n≥1)). Desirably, inorganic sulfur S₈ may be used.

As the positive electrode active material includes the sulfur compound, an electrochemical device including the electrode assembly 100 according to an example embodiment may be a lithium-sulfur battery.

Since sulfur included in the positive electrode active material does not have electrical conductivity when used singly, the sulfur may be compounded with a conductive material such as a carbon material to be used. Accordingly, the sulfur may be included in a form of a sulfur-carbon compound, and desirably, the positive electrode active material may be the sulfur-carbon compound.

The conductive material may be a material for electrically connecting an electrolyte and the positive electrode active material to serve as a path of migration of an ion from the current collector to the positive electrode active material. A material having conductivity may be used without limitation.

For example, as the conductive material, graphite such as natural graphite or artificial graphite, carbon black such as Super-P, Denka black, acetylene black, channel black, furnace black, lamp black, or thermal black, a carbon derivative such as a carbon nanotube or fullerene, a conductive fiber such as a carbon fiber or a metallic fiber, a fluorocarbon, a metal powder such aluminum power or nickel power, or a polymer such as polyaniline, polythiophene, polyacetylene, or polypyrrole may be singly used or a mixture thereof may be used.

The binder may maintain the positive electrode active material in the positive electrode current collector and organically connect positive electrode active materials to increase a adhesive force in between. All binders known in a corresponding field may be used as the binder.

For example, one selected from a group including a fluoropolymer-based binder including polyvinylidene fluoride (PVdF) or polytetrafluoroethylene (PTFE), a rubber-based binder including styrene-butadiene rubber (SBR), acrylonitrile-butadiene rubber, and styrene-isoprene rubber, a cellulosic binder including carboxyl methyl cellulose (CMC), starch, hydroxypropyl cellulose, and regenerated cellulose, a polyalcohol-based binder, a polyolefin-based binder including polyethylene and polypropylene, a polyimide-base binder, a polyester-based binder, and a silane-based binder or a compound or a copolymer of two selected therefrom may be used as the binder.

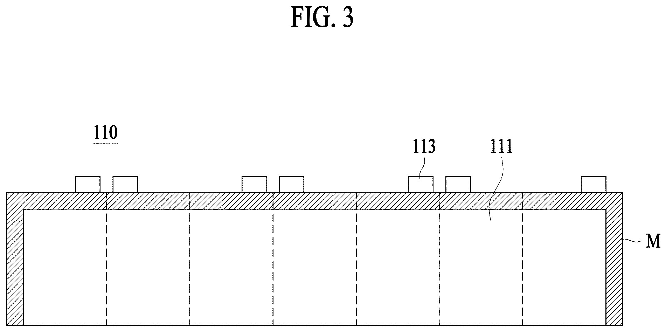

Referring to FIG. 3, at least a portion of an edge area of the two layers of separators 111 may be thermally fused in a state in which the first electrode 112 is disposed between the two layers of separators 111. The thermal fusion may be performed in an area of the two layers of separators 111, which does not overlap the first electrode 112, in other words, in the margin area M.

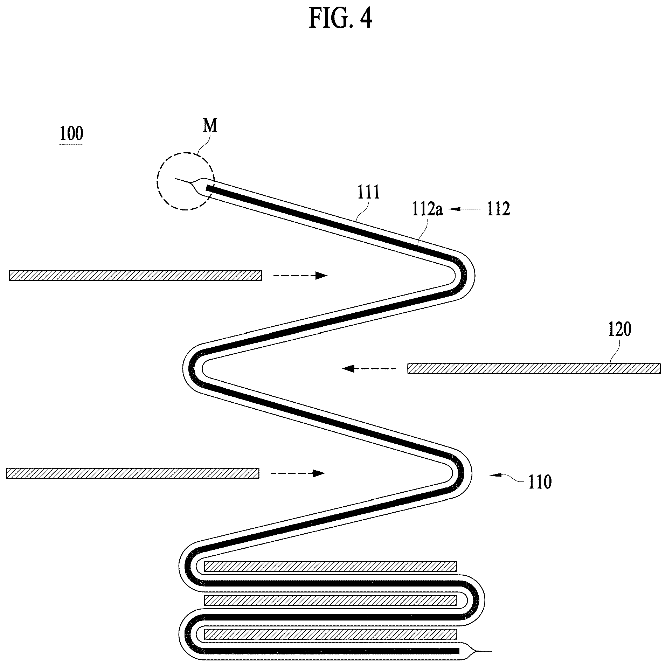

The electrode-separator assembly 110 may be formed as a remaining edge other than a folded edge among the edges of the two layers of separators 111 is thermally fused. For example, with FIG. 4 as a reference, the folding line F formed as the one separator 111 is folded may form the one long side of the two layers of separators 111, and the thermal fusion may be performed at remaining three edges among the edges of the two layers of separators 111.

In contrast, when the folding line F is formed at the one short side of the two layers of separators 111, the thermal fusion may be formed at a remaining short side and two long sides of the two layers of separators 111. For example, with FIG. 3 as a reference, when the folding line F formed as the one separator 111 is folded may form a left edge of the two layers of separators 111, the thermal fusion may be performed at remaining three edges.

Also, unlike the above description, when the two layers of separators 111 are formed as two separate separators 111 overlap each other, not as the one separator 111 is folded, the thermal fusion may be performed at all the four edges of the two layers of separators 111.

As such, since an edge of the two layers of separators 111 may be tightly sealed by the folding line F and/or the thermal fusion, battery ignition or battery overload may be suppressed, so that stability of the battery may be increased. Specifically, although the separator 111 contracts as a temperature of the electrode assembly 100 is increased, the first electrode 112 may not be exposed to an outside due to sealing of the two layers of separators 111. Accordingly, an electrical short circuit may be prevented from occurring between the first electrode 112 and the second electrode 120, so that the battery ignition or the battery overload may be suppressed. Also, since contact of the first electrode 112 with outside air may be minimized through the sealing of the two layers of separators 111, acceleration of the battery ignition due to the contact with the air may be prevented.

Referring to FIGS. 1 through 3, the electrode assembly 100 may include a tab 113. The tab 113 may protrude from the first electrode 112. The tab 113 may protrude outward from the two layers of separators 111.

The tab 113 may be provided to each of the plurality of first electrode plates 112a. As illustrated in FIG. 5, tabs 113 individually connected to the plurality of first electrode plates 112a may be disposed to be placed at positions to vertically overlap each other in a state in which the electrode-separator assembly 110 is folded zigzag. For example, referring to FIG. 1, the tab 113 which is provided to one first electrode plate 112a and the tab 113 which is provided to a first electrode plate 112a adjacent to the one first electrode plate 112a may be understood as being disposed at positions axisymmetric with respect to a line (which is a dotted line) at which the-above described two electrode plates 112a are folded. Through this, since the tab 113 may be vertically aligned in the state in which the electrode-separator assembly 110 is folded zigzag, a structure for connecting the tab 113 to a lead may be simplified.

The tab 113 may be formed by notching the first electrode 112. For example, in the first electrode 112 which has a rectangular shape in a size of 6 centimeters (cm) * 24.5 cm, a portion of one side edge of the first electrode 112 other than a portion at which the tab 113 is to be formed may be notched and removed so that the tab 113 is formed to each of the plurality of first electrode plates 112a distinguished in a size of approximately 3.5 cm. Through this, the tab 113 protruding from the first electrode 112 may be formed.

Referring to FIG. 1, a structure in which tabs 113 disposed to be adjacent to each other at two adjacent electrode plates among the plurality of first electrode plates 112a may be formed.

Referring to FIGS. 1 and 2, the electrode-separator assembly 100 may include a sealing member 130. The sealing member 130 may be disposed at a portion of the edge area of the two layers of separators 111, at which the thermal fusion is not properly performed due to the tab 113, to serve to reinforce the sealing of the two layers of separators 111.

Specifically, the sealing member 130 may be provided between the two layers of separators 111 at least at a position, at which the tab 113 is provided in the edge area of the two layers of separators 111, and in an area around the position at which the tab 113 is provided. Specifically, the sealing member 130 may be provided at least to cover two adjacent tabs 113 disposed to be adjacent to each other at two adjacent first electrode plates 112a among the plurality of first electrode plates 112a. Since a possibility that the sealing of the separators 111 by the thermal fusion is not properly performed as the two layers of separators 111 are not properly in contact at a portion at which the two tabs 113 are disposed to be adjacent to each other is high, it may be desired that the sealing member is provided at least to cover all the two adjacent tabs 113.

FIGS. 1 and 2 illustrate that the sealing member 130 is provided to each pair of two adjacent tabs 113, but is not limited thereto. The sealing member 130 may be elongated in a longitudinal direction of the electrode-separator assembly 110 and provided throughout an entire edge at which the tab 113 is positioned (e.g., an upper edge in FIGS. 1 through 3) among the edges of the two layers of the separators 111.

The sealing member 130 may be provided to one surface and the other surface of the tab 113. Before an operation of thermally fusing the two layers of the separators 111, the sealing member 130 may be attached to each of the one surface and the other surface of the tab 113 or attached to surfaces facing each other of the two layers of separators 111. In addition, some areas of the sealing member 130 may overlap the first electrode 112. That is, with FIG. 3 as a reference, the sealing member 130 may be provided so that a lower end portion thereof partially overlaps the first electrode 112. Through such a structure, the sealing of the separators 111 in an area around the tab 113 may be securely reinforced.

The sealing member 130 may have a material having mechanical strength, chemical resistance, and heat resistance, having an excellent insulation property, and having an electrical property of low permittivity. For example, the sealing member 130 may have a polyimide material. When the thermal fusion is performed at the edge of the two layers of separators 111 in a state in which the sealing member 130 is disposed in the area around the tab 113, the sealing member 130 may fill a portion at which the two layers of separators 111 are not completely in contact with each other due to the tab 113, so that the sealing of the separators 111 in the area around the tab 113 may be reinforced.

Referring to FIG. 5, the electrode-separator assembly 110 in a state of being thermally fused may be folded in a zigzag from in the longitudinal direction. In this process, the separators 111 and the first electrode 112 which form the electrode-separator assembly 110 may be understood as being folded zigzag together. When the electrode-separator assembly 110 is folded zigzag, a sealing state of the separators 111 due to the thermal fusion may be maintained.

As described above, the electrode-separator assembly 110 may be formed by surrounding the first electrode 112 with the two layers of separators 111 and sealing the edge of the separators 111. Through this, a position of the first electrode 112 with respect to the separators 111 may be relatively fixed, folding the electrode-separator assembly 110 zigzag may be easily performed accordingly, and the electrode assembly 100 may be simply and efficiently manufactured.

The electrode assembly 100 may include the second electrode 120. The second electrode 120 may be provided as a plurality of pieces thereof unlike the first electrode 112. The second electrode 120 may be provided to correspond to the plurality of first electrode plates 112a. The second electrode 120 may be disposed between layers of the electrode-separator assembly 110 which is folded and stacked. At this point, the second electrode 120 may be separated from the first electrode 112 by the separators 111.

The second electrode 120 may be a negative electrode. when the electrode assembly 100 according to an example embodiment of the present disclosure is used in a lithium metal battery, the second electrode 120 may be formed of lithium metal.

When the second electrode 120 is a negative electrode for the lithium metal battery, the second electrode 120 may include a porous basic material. The porous basic material may be a porous polymer basic material not causing lithiation. When the porous basic material which serves as a supporter for lithium causes the lithiation, since tensile strength and elongation of the negative electrode are greatly decreased, it may be desired that a basic material not causing the lithiation is used as the porous basic material.

For example, the porous basic material may include one selected from a group including polyolefin such as polyethylene or polypropylene, polyester such as polyethyleneterephthalate or polybutyleneterephthalate, polyamide, polyacetal, polycarbonate, polyetheretherketone, polyethersulfone, polyphenyleneoxide, polyphenylenesulfide, polyethylenenaphthalate, polytetrafluoroethylene, polyvinylidenefluoride, polyvinylchloride, polyacrylonitrile, cellulose, nylon, poly-p-phenylenebenzobisoxazole, polyarylate, and a combination thereof and may be desirably polyethyleneterephthalate, but is not particularly limited thereto. However, polyimide that is a polymer which may cause the lithiation may not be proper to be used as the porous basic material.

The second electrode 120 which is the negative electrode for the lithium metal battery may include a carbon-coated layer formed on a surface of the porous material, and the carbon-coated layer may include a planar carbon particle.

The carbon-coated layer formed on the surface of the porous material may include a conductive carbon particle. Due to the conductive carbon particle included in the carbon-coated layer, an affinity between the porous basic material serving as a supporter for the negative electrode and the lithium metal may be improved. Through this, since forming a stable structure is allowed when lithium is plated, efficiency of the lithium may be improved, and quality of a process of manufacturing a lithium negative electrode may be improved.

The carbon-coated layer may include the planar carbon particle. For example, the carbon-coated layer may include planar graphene or a graphene derivative. Desirably, the carbon-coated layer may include one selected from a group including graphene, reduced graphene oxide (RGO), graphene oxide (GO), and a combination thereof and further desirably may be graphene. When the planar carbon particle is included in the carbon-coated layer, an air cavity on a surface of the porous basic material may be reduced, and plating the lithium may be controlled irrespective of a relative distance to a positive electrode.

The second electrode 120 which is the negative electrode for the lithium metal battery may include a lithium metallic layer. The lithium metallic layer may be a metallic layer including a lithium metal element. A material of the lithium metallic layer may be lithium alloy, lithium metal, an oxide of the lithium alloy, or lithium oxide. As a non-limitative example, the negative electrode may be a thin film of the lithium metal and may be an alloy of lithium and one metal selected from a group of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn). At this point, a portion or a surficial oxidized layer of the lithium metallic layer may alter or include an impurity.

The lithium metallic layer may be tightly attached to a structure of the porous basic material and the carbon-coated layer through a rolling process after stacked on the carbon-coated layer formed on the porous metallic layer. Due to the above-described rolling, the entire lithium or a portion thereof may permeate the porous basic material to be positioned in the air cavity of the porous basic material. In addition, the rolling process may be performed by using a release film, which does not have a property of being attached to the lithium, on a surface of the lithium in direct contact with a roll at a time of the rolling. Additionally, in order to stabilize the porous basic material and an interface of the lithium metallic layer, an aging processing process of storing for hours or days in a state of being isolated from oxygen and moisture and sealed with a pouch may be performed.

After the carbon-coated layer is formed by preparing the porous basic material, coating the surface of the porous basic material with a dispersion including the planar carbon particle, and then vacuum-drying the surface, the second electrode 120 which is the negative electrode for the lithium metal battery may be manufactured by stacking and rolling lithium metal foil on the carbon-coated layer. The above-described coating method may be desirably a dip coating method, but is not particularly limited thereto. Also, the above-described rolling method is not particularly limited, and a method generally used in a corresponding field may be used.

The second electrode 120 which is the negative electrode for the lithium metal battery may have a structure in which the carbon-coated layer is formed on one surface of the porous basic material and the lithium metallic layer is stacked on one surface of the carbon-coated layer facing in a opposite direction of the porous basic material. The negative electrode of the structure in which the lithium metallic layer is stacked on the one surface of the carbon-coated layer may be used desirably in a mono-cell or a coin cell.

The second electrode 120 which is the negative electrode for the lithium metal battery may have a multilayered structure in which the porous basic material is positioned in a center, the carbon-coated layer is formed on each of both surfaces of the porous basic material, and the lithium metallic layer is stacked on each surface of the carbon-coated layer facing in a opposite direction of the porous basic material. The negative electrode of the multilayered structure may be used in a cell in various shapes forming a stacking structure.

Hereinafter, a method of manufacturing an electrode assembly according to an example embodiment of the present disclosure will be described below.

Referring to FIG. 1, the method of manufacturing the electrode assembly may include supplying the two layers of the separators 111 of which each layer is rectangular.

The supplying of the two layers of the separators 111 may include folding the one separator 111. At this point, the folding line F formed as the one separator 111 is folded may be parallel to the longitudinal direction of the two layers of separators 111. That is, referring to FIG. 1, the folding line F of the separators 111 may form one of the long sides of the rectangular two layers of separators 111.

However, the folding line F formed as the one separator 111 is folded may form one of short sides of the two layers of separators 111. In this case, the one separator 111 may be provided to have a longitudinal that is approximately two times a longitudinal of the electrode-separator assembly 10.

Referring to FIG. 2, the method of manufacturing the electrode assembly may include disposing, between the two layers of separators 111, the first electrode 112 having the rectangular shape extended in the direction corresponding to the two layers of separators 111. At this point, the first electrode 112 may be inserted between the two layers of separators 111 after the one separator 111 is folded in advance, or the first electrode 112 may be disposed between the two layers of separators 111 by disposing the first electrode 112 on the one separator 111 before the one separator 111 is folded and then folding the one separator 111.

Referring to FIGS. 1 and 2, the method of manufacturing the electrode assembly may include attaching the sealing member 113 to at least one surface of the tab 113 after or before disposing the first electrode 112 between the two layers of separators 111. Desirably, the disposing of the first electrode 112 may include attaching the sealing member to the one surface and the other surface of the tab 113.

The attaching of the sealing member 130 to the at least one surface of the tab 113 may be performed before the first electrode 112 is disposed between the two layers of separators 111 as illustrated in FIGS. 1 and 3. However, in contrast, the attaching of the sealing member 130 to the at least one surface of the tab 113 may be performed after the first electrode 112 is disposed between the two layers of separators 111.

Meanwhile, unlike illustrations of FIGS. 1 and 2, the sealing member 130 may be disposed on at least one of inner side surfaces of the two layers of separators 111, which face each other. Desirably, the sealing member 130 may be disposed on each of the inner side surfaces of the two layers of the separators 111, which face each other. In this case, the sealing member 130 may be disposed at a position overlapping the tab 113 on an inner side surface of the two layers of separators 111 and in an area corresponding to an area around the position. The attaching of the two layers of separators 111 to the sealing member 130 may be allowed to be performed at a time point after or before the first electrode 112 is disposed between the two layers of separators 111.

Referring to FIG. 3, the method of manufacturing the electrode assembly may include forming the electrode-separator assembly 110 formed with the two layers of separators 111 and the first electrode 112 by thermally fusing the at least a portion of the edge area of the two layers of separators 111.

The thermal fusion may be performed by pressing an edge portion of the two layers of separators 111 with a hot-press (not illustrated). At this point, a release film (not illustrated) may be disposed between the hot-press and the two layers of separators 111. That is, the thermal fusion may be performed by pressing an upper portion of the release film with the hot-press after an outer side surface of one side of the two layers of separators 111 is covered with the release film. The release film may have a weak property of being attached to the separators 111. With use of the release film in the thermal fusion, the edge of the two layers of separators 111 may be thermally fused in a state of being flat without being pushed in one direction.

Referring to FIG. 4, the method of manufacturing the electrode assembly may include disposing, with folding the electrode-separator assembly 110 in a zigzag form, the second electrode 120 between the layers of the electrode-separator assembly 110 which is folded and stacked. The electrode-separator assembly 110 may be understood as being folded zigzag along dotted lines illustrated in FIGS. 1 through 3. The second electrode 120 may be disposed one by one in a process of folding the electrode-separator assembly 110 or may be disposed to the layers of the electrode-separator assembly 110 which is folded and stacked after the electrode-separator assembly 110 is folded in advance.

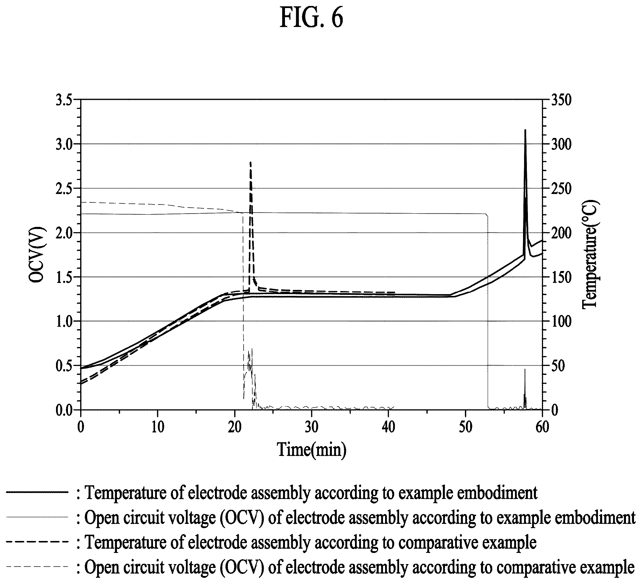

FIG. 6 is a graph comparing a time point of an electrical short circuit and a time point of ignition in a battery cell including an electrode assembly according to an example embodiment of the preset disclosure and a time point of an electrical short circuit and a time point of ignition in a battery cell including an electrode assembly according to a comparative example.

An example embodiment shows an electrode assembly having a structure in which an electrode-separator assembly is formed by thermally fusing an edge of two layers of separators after a first electrode is surrounded by the two layers of separators and in which, while the electrode-separator assembly is folded zigzag, second electrodes are alternately disposed in gaps in the zigzag folded electrode-separator assembly, such as the electrode assembly according to an example embodiment of the present disclosure.

The comparative example shows an electrode assembly having a structure in which a positive electrode, a negative electrode, and a separator each are provided in plurality, in which the positive electrode, the negative electrode, and the separator are simply stacked, and in which the positive electrode and the negative electrode are separated simply by one separator.

FIG. 6 illustrates a time point at which battery ignition occurs in an example embodiment and the comparative example in a process of increasing a temperature around an electrode assembly up to 130 degrees Celsius (°C) at a speed of 5 degrees Celsius per minute (°C/min) through hot-box evaluation, maintaining the temperature at 130°C for thirty minutes, and then increasing the temperature up to 250°C at a speed of 5 °C/min again.

In FIG. 6, a thick solid line shows a temperature of the electrode assembly according to an example embodiment, a thin solid line shows an open circuit voltage (OCV) of the electrode assembly according to an example embodiment, a thick dotted line shows a temperature of the electrode assembly according to the comparative example, and a thin dotted line shows an open circuit voltage of the electrode assembly according to the comparative example.

Referring to FIG. 6, when open circuit voltages in an example embodiment and the comparative example are compared, it may be identified that an electrical short circuit occurs at a time at which the temperature of the electrode assembly according to the comparative example reaches 130°C and the open circuit voltage is rapidly decreased. In contrast, it may be identified that an electrical short circuit does not occur when the temperature of the electrode assembly according to an example embodiment is 130°C and that the electrical short circuit occurs at a time at which the temperature of the electrode assembly reaches approximately 150°C.

In addition, when ignition time points in an example embodiment and the comparative example are compared, it may be known that battery ignition occurs with a rapid increase in temperature immediately after the temperature of the electrode assembly according to the comparative example reaches 130°C. In contrast, it may be known that battery ignition does not occur when the temperature of the electrode assembly according to an example embodiment is 130°C and that the battery ignition occurs at a time at which the temperature of the electrode assembly reaches approximately 180°C while a temperature of a hot-box is increased thereafter.

Depending on an overall structure and environment of an electrode assembly, a time point of an electrical short circuit and a time point of ignition in the electrode assembly may differ.

Through a result of such an experiment, in an example embodiment, although the separators contract as the temperature around the electrode assembly is increased, it may be identified that an electrical short circuit between a positive electrode and a negative electrode may be prevented because the first electrode may be isolated from a second electrode due to sealing of the separators and that the battery ignition is suppressed because contact of the first electrode with outside air may also be prevented due to the sealing of the separators.

The example embodiments or other example embodiments of the present disclosure described above are not mutually exclusive or distinguished from each other. Each element or function in the example embodiments or other example embodiments of the present disclosure described above may be used in combination with or combined to another.

For example, the element A described in an example embodiment and/or a drawing and/or the element B described in another example embodiment and/or another drawing may be combined. In other words, although combination between elements has not been directly described, the combination may be possible unless the combination is described as being impossible.

The above-described details are not to be limitedly construed in all aspects and are to be considered as an example. The scope of the present disclosure is to be determined by a reasonable interpretation of the accompanying claims, and all modifications within a range equivalent to the present disclosure belong to the scope of the present disclosure.

### [Description of Reference Numerals]

100: Electrode assembly
110: Electrode-separator assembly
111: Separator
112: First electrode
112a: First electrode plate
113: Tab
120: Second electrode
130: Sealing member
M: Margin area
F: Folding line

## Claims

1. An electrode assembly comprising:
an electrode-separator assembly comprising two layers of separators of which each layer is rectangular and a fist electrode disposed between the two layers of separators in a rectangular shape extended in a direction corresponding to the two layers of separators; and
a second electrode separated from the first electrode by the separators,
wherein at least a portion of an edge area of the two layers of separators is thermally fused in a state in which the first electrode is disposed between the two layers of separators,
the electrode-separator assembly in a state of being thermally fused is folded in a zigzag form in a longitudinal direction, and
the second electrode is disposed between layers of the electrode-separator assembly which is folded and stacked.

2. The electrode assembly of claim 1, further comprising:
a tab that protrudes from the first electrode and of which a portion is exposed outward from the two layers of separators; and
a sealing member provided between the two layers of separators at least at a position, at which the tab is provided in an edge area of the two layers of separators, and in an area around the position at which the tab is provided.

3. The electrode assembly of claim 2, wherein the first electrode comprises
a plurality of first electrode plates folded together and distinguished from each other as the electrode-separator assembly is folded zigzag,
the tab is provided to each of the plurality of first electrode plates and provided to be adjacent to another at two adjacent first electrode plates among the plurality of first electrode plates, and
the sealing member is provided at least to cover all the two adjacent tabs.

4. The electrode assembly of claim 2, wherein the sealing member is provided to one surface and the other surface of the tab.

5. The electrode assembly of claim 2, wherein at least a portion of an area of the sealing member overlaps the first electrode.

6. The electrode assembly of claim 2, wherein the sealing member has a polyimide material.

7. The electrode assembly of claim 1, wherein the two layers of separators are formed as one separator is folded in half, and
the electrode-separator assembly is formed as a remaining edge other than a folded edge among edges of the two layers of separators is thermally fused.

8. The electrode assembly of claim 7, wherein a folding line formed as the one separator is folded is formed in a direction parallel to a longitudinal direction of the two layers of separators.

9. The electrode assembly of claim 1, wherein thermal fusion is performed in an area of the two layers of separators, which does not overlap the first electrode.

10. The electrode assembly of claim 1, wherein the second electrode is a negative electrode formed of lithium metal, and
the first electrode is a positive electrode.

11. A method of manufacturing an electrode assembly, the method comprising:
supplying a two layers of separators of which each layer is rectangular;
disposing, between the two layers of separators, a first electrode having a rectangular shape extended in a direction corresponding to the two layers of separators;
forming an electrode-separator assembly formed with the two layers of separators and the first electrode by thermally fusing at least a portion of an edge area of the two layers of separators; and
disposing, with folding the electrode-separator assembly in a zigzag form, the second electrode between layers of the electrode-separator assembly which is folded and stacked.

12. The method of claim 11, wherein the supplying of the two layers of separators comprises folding one separator, and
a folding line formed as the one separator is folded is formed in a direction parallel to a longitudinal direction of the two layers of separators.

13. The method of claim 11, wherein the electrode assembly comprises:
a tab that protrudes from the first electrode and of which a portion is exposed outward from the two layers of separators; and
a sealing member provided between the two layers of separators at least at a position, at which the tab is provided in an edge area of the two layers of separators, and in an area around the position at which the tab is provided, and
the method further comprises attaching the sealing member to at least one surface of the tab after disposing the first electrode between the two layers of separators.

14. The method of claim 11, wherein the first electrode comprises a plurality of first electrode plates folded together and distinguished from each other as the electrode-separator assembly is folded zigzag, and
the method further comprises forming, before the first electrode is disposed between the two layers of separators, a tab for each of the plurality of first electrode plates by notching an edge of one side of the first electrode which is provided in the rectangular shape.

15. The method of claim 11, wherein the supplying of the two layers of separators comprises folding one separator,
the thermally fusing is performed by covering an outer surface of one side of the two layers of separators with a release film and pressing an upper portion of the release film with a hot-press, and
the at least a portion of the edge area of the two layers of separators is edges of remaining three sides other than an edge at which the one separator is folded.
